# EUROPEAN PATENT SPECIFICATION

(11) **EP 2 054 234 B1**
(45) Date of publication and mention of the grant of the patent: **07.07.2010**
(21) Application number: 07841340.8
(22) Date of filing: 24.08.2007
(51) Int. Cl.: B41M 5/30, G11B 7/246

(54) **LIGHT ACTIVATED CONTRAST SYSTEMS USING MASKED DEVELOPERS FOR OPTICAL DATA RECORDING**
LICHTAKTIVIERTE KONTRASTSYSTEME MIT MASKIERTEN ENTWICKLERN ZUR AUFZEICHNUNG OPTISCHER DATEN
SYSTÈME DE CONTRASTE ACTIVÉ PAR LUMIÈRE UTILISANT DES RÉVÉLATEURS MASQUÉS POUR L'ENREGISTREMENT OPTIQUE DE DONNÉES

(30) Priority: 24.08.2006 US 840279 P; 02.10.2006 US 827814 P
(43) Date of publication of application: 06.05.2009
(73) Proprietor: Hewlett-Packard Development Company, L.P., Houston, TX 77070 (US)
(72) Inventor: GORE, Makarand, P., Fort Collins, CO 80528 (US)
(74) Representative: Zimmermann, Tankred Klaus
(86) International application number: PCT/US2007/076778
(87) International publication number: WO 2008/024984

(56) References cited:
- EP-A- 0 381 492
- WO-A-2005/025885
- WO-A-2005/097876
- JP-A- 2001 083 658

## Description

### BACKGROUND

Materials that produce color change upon stimulation with radiation are used in optical recording and imaging media and devices. Further, widespread adoption of and rapid advances in technologies relating to optical recording and imaging media have created a desire for greatly increased data storage capacity in such media. Thus, optical storage technology has evolved from the compact disc (CD) and laser disc (LD) to far denser data types such as digital versatile disc (DVD) and blue laser formats such as BLU-RAY and high-density DVD (HD-DVD). "BLU-RAY" and the BLU-RAY Disc logo mark are trademarks of the BLU-RAY Disc Founders, which consists of 13 companies in Japan, Korea, Europe, and the U.S.

In each case, the optical recording medium comprises a substrate, typically a disc, on which is deposited a layer on which a mark can be created. In some media the mark is a "pit," or indentation in the surface of the layer, and the spaces between pits are called "lands." In other media, the mark is a localized region in which the optical properties, such as reflectivity or transparency, are modified. A marked disc can be read by directing a laser beam at the marked surface and recording changes in the reflected beam as the beam moves across the surface of the medium. An optical recording medium consists of any surface coated with a material that can be read using an incident light beam.

JP-A-2001083658 (patent abstract of Japan) discloses a photo-image recording material having a recording layer on a substrate. The recording layer contains a photo-acid generating agent, a precursor of a developer and an electron donative leuco dye. The precursor is a material which forms an electron accepting compound having a phenolic hydroxyl group and a generated acid. The recording layer is imagewise irradiated with light of a specific wavelength to form an acid latent image. Then the recording layer is heated to form the objective positive image.

WO-A2005/025885 discloses compositions and methods for producing color images using leuco dye-containing color forming compositions. The color forming compositions include a color forming leuco dye, an activator having at least one acid group which can be protected by a protection leaving group, and a deprotection agent configured for removing the protection leaving group upon application of energy in the form of heat or light. The composition may include absorbers comprising an electromagnetic radiation sensitive agent that can generate heat or transfer energy to surrounding molecules upon exposure to a predetermined frequency of electromagnetic radiation. The compositions can be used for identifying the contents of an optical disk by forming a color image on the non-data side of the disk.

It remains desirable to improve the markability and manufacturability of optical recording media and increase data density thereon while reducing cost and complexity.

### BRIEF DESCRIPTION OF THE DRAWINGS

Features and advantages of embodiment(s) of the present disclosure will become apparent by reference to the following detailed description and the drawings, in which like reference numerals correspond to similar, though perhaps not identical components. Reference numerals having a previously described function may or may not be described in connection with other drawings in which they appear.

Figure 1 is a perspective view and block diagram illustrating an embodiment of an optical disc recording system;

Figure 2 is a side elevation view of an embodiment of a recordable optical disc shown in conjunction with a partial block diagram of some of the elements of the system represented in Figure 1; and

Figure 3 is a chemical diagram illustrating an exemplary deprotection and reaction.

### NOTATION AND NOMENCLATURE

Certain terms are used throughout the following description and claims to refer to particular system components. As one skilled in the art will appreciate, computer companies may refer to a component by different names. This document does not intend to distinguish between components that differ in name but not function. In the following discussion and in the claims, the terms "including" and "comprising" are used in an open-ended fashion, and thus should be interpreted to mean "comprising, but not limited to...."

Reference is made herein to BLU-RAY technologies. Disc specifications for BLU-RAY discs currently include the following: wavelength = 405 nm; numerical aperture (NA) = 0.85; disc diameter = 12 cm; disc thickness = 1.2 mm; and data capacity ≥ 23.3/25/27 GB. BLU-RAY discs can currently be used to store 2 hours high resolution video images or 13 hours conventional video images. A blue-violet laser having a wavelength range between 380 nm and 420 nm, and particularly 405 nm is used as the light source for BLU-RAY discs. Another example of storage media and technology using blue light (380-420nm radiation) is HD-DVD. Furthermore, "Hybrid" media, methods and devices capable of writing and reading at 405 nm, 650 nm and 780 nm +/- 30nm are in development.

As used herein, the term "leuco dye" refers to a color-forming substance that is colorless or one color in a non-activated state and that produces or changes color in an activated state. As used herein, the terms "developer" and "develop" describe a substance that reacts with the dye and causes the dye to alter its chemical structure and change or acquire color.

The term "light" as used herein includes electromagnetic radiation of any wavelength or band and from any source, such as a LASER diode or LED.

### DETAILED DESCRIPTION

The invention is as defined in the claims.

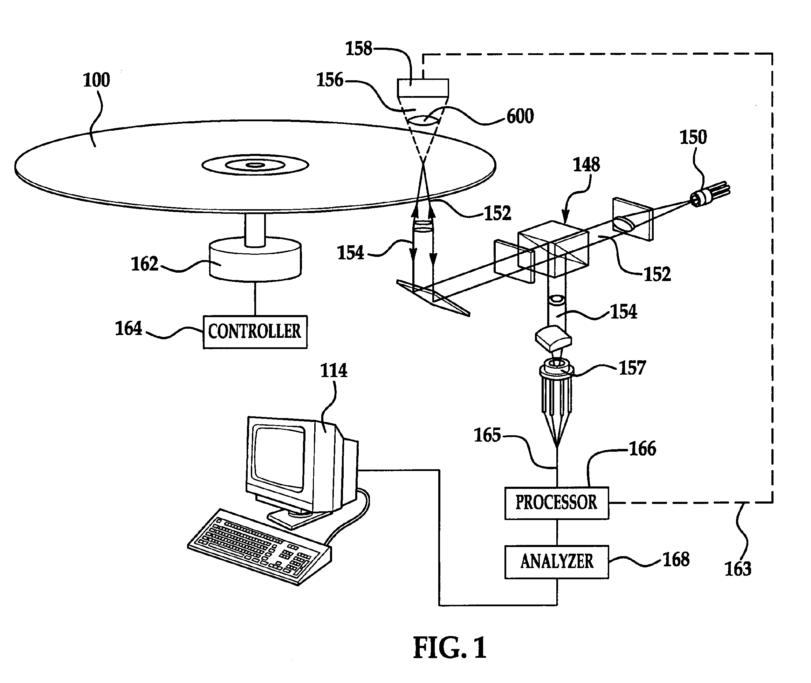

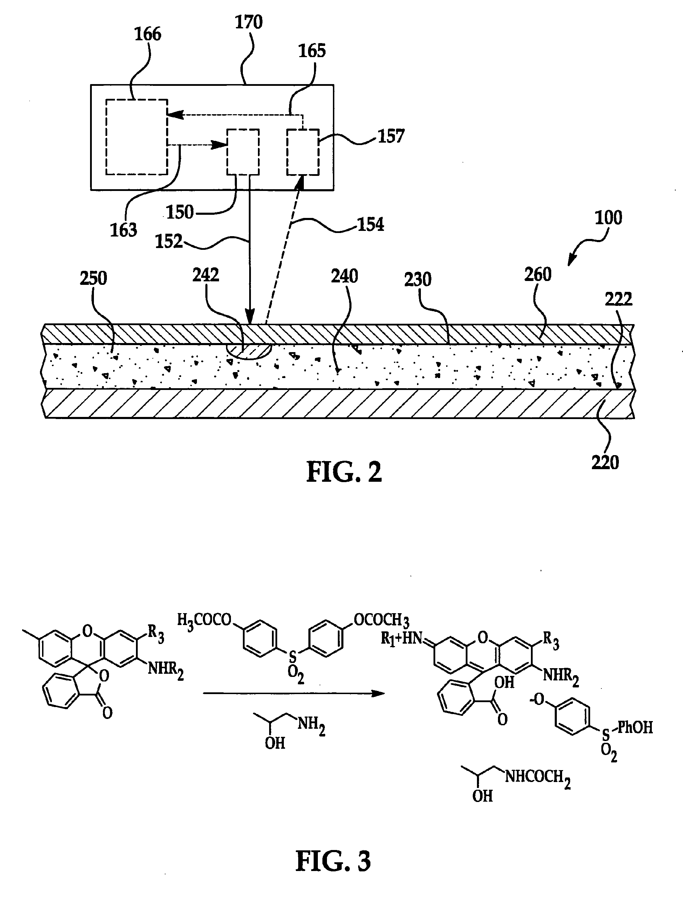

Referring to Figure 1, there is shown a representation in perspective and block diagram illustrating optical components 148, a light source 150 that produces the incident or interrogation energy beam 152, a return beam 154 which is detected by the pickup 157, and a transmitted beam 156. In the transmissive optical disc form, the transmitted beam 156 is detected by a top detector 158 via lens or optical system 600, and is also analyzed for the presence of signal agents. In the transmissive embodiment, a photo detector may be used as a top detector 158. Figure 2 shows an abbreviated block diagram of the read/write system 170 illustrating some of the same optical components.

Figure 1 also illustrates a drive motor 162 and a controller 164 for controlling the rotation of the optical disc/imaging medium 100. Figure 1 further shows a processor 166 and analyzer 168 implemented in the alternative for processing the return beam 154 with a signal 165 from the pickup 157 to the processor 166, as well as processing a transmitted beam 156 from a signal 163 transmitted from the optical detector 158 and associated with the transmissive optical disc format. A display monitor 114 is also provided for displaying the results of the processing.

Referring briefly to Figure 2, there is shown in a partial block diagram the read/write system 170 that applies an energy beam 152 onto the imaging medium 100. Imaging medium 100 comprises a substrate 220 and a marking layer 230 on a surface 222 thereof. In the embodiment shown, imaging medium 100 further comprises a protective layer 260.

As described in detail below, marking layer 230 preferably comprises a color-forming agent 240 dissolved in a matrix or binder 250. Marking layer 230 may comprise a polymeric matrix and may include an optional fixing agent and/or a radiation absorber (not shown).

Substrate 220 may be any substrate upon which it is desirable to make a mark, such as, by way of example, the polymeric substrate of a CD-R/RW/ROM, DVD±R/RW/ROM, HD-DVD or BLU-RAY disc. Substrate 220 may be paper (e.g., labels, tickets, receipts, or stationery), overhead transparency, or other surface upon which it is desirable to provide marks. Marking layer 230 may be applied to substrate 220 via any acceptable method, such as, by way of example, rolling, spin-coating, spraying, lithography, or screen printing.

When it is desired to make a mark, marking energy 152 is directed in a desired manner at imaging medium 100. The form of the energy may vary depending upon the equipment available, ambient conditions, and desired result. Examples of energy (also referred to as radiation) that may be used include, but are not limited to, infra-red (IR) radiation, ultra-violet (UV) radiation, x-rays, or visible light. In these embodiments, imaging medium 100 is illuminated with light having the desired predetermined wavelength at the location where it is desired to form a mark. The marking layer 230 absorbs the radiation at an absorption wavelength range selected from the group consisting of 370 nm to 380 nm, 380 nm to 420 nm, 400 nm to 415 nm, 468 nm to 478 nm, 650 nm to 660 nm, 780 nm to 787 nm, 970 nm to 990 nm, and 1520 nm to 1580 nm, causing a change in marking layer 130 and thereby producing an optically detectable mark 242.

The color-forming agent 240 may be any substance that undergoes a detectable optical change in response to a threshold stimulus, which may be applied in the form of light or heat. In some embodiments, the color-forming agent comprises a leuco dye and a developer, as described in detail below. The developer and the leuco dye produce a detectable optical change when chemically mixed. The concentration and distribution of the color-forming components 240 in marking layer 230 are preferably sufficient to produce a detectable mark when activated.

In many embodiments, it is desirable to provide a marking layer 230 that is less than one micron (µm) thick. In order to achieve this, spin coating is a suitable application technique. In addition, it is desirable to provide a marking composition that is capable of forming a layer occupying the predetermined thickness. Thus, in such cases, the marking layer should be, *inter alia,* free from particles that would prevent such a layer, i.e., free from particles having a dimension greater than 1 µm.

Furthermore, in many applications it may be desirable to provide a markable coating that is transparent. In such a case, any particles present in the coating would need to have an average size less than the wavelength of the light to which the coating is transparent. While a coating in which all particles are smaller than 1 µm would serve this purpose, a coating in which the marking components are dissolved is preferred over one in which they are present as particles. Still further, as target data densities increase, the dot size, or mark size, that can be used for data recording decrease. Some currently available technologies require an average dot size of 1 µm or less. For all of these reasons, marking layer 230 is therefore preferably, but not necessarily, entirely free of particles.

In a marking layer in which both color-forming components 240 are dissolved, it is necessary to prevent the color-forming components 240 from combining prematurely and generating an optical change across the entire marking layer. This is accomplished by providing a protective moiety on either the dye or the developer. In preferred embodiments, the protective moiety is provided on the developer and a deprotection agent is included in the marking layer. In alternative embodiments, the protective moiety is provided on the dye. In either embodiment, an increase in temperature causes the protective moiety to be removed from the developer. Removal of the protective moiety exposes an active acid and leaves the developer free to react with the leuco dye. Thus, once the developer has been deprotected by the deprotection agent, a color-forming reaction occurs between the developer and the dye. Thus, if sufficient energy is applied to the desired region of marking layer 230, an optically detectable mark 242 can be produced.

The resulting mark 242 can be detected by an optical sensor, thereby producing an optically readable device. Depending on the color-forming agent 240 selected, the marking composition may become relatively more or relatively less absorbing at a desired wavelength upon activation. Because many commercial and consumer products use a single wavelength for both read and write operations, and because a color-forming agent 240 that produces a mark that is relatively absorbing (relative to the unmarked regions) at the read wavelength may be particularly advantageous, it is desirable to provide a color-forming agent 240 that produces a mark that is relatively absorbing at the read/write wavelength.

Thus, by way of example only, if blue-violet light (radiation) is to be used as the read radiation, the marks formed in the marking layer are preferably a contrasting color, namely yellow to orange, indicating absorption of blue radiation. In certain embodiments, therefore, the marking composition contains a leuco dye that, when activated, changes from being relatively non-absorbing at blue-violet wavelengths to being relatively absorbing at those wavelengths.

Nonetheless, the embodiments disclosed herein are not limited to such dyes. Specific examples of other suitable leuco dyes include fluorans and phthalides, which include but are not limited to the following and which can be used alone or in combination: 1,2-benzo-6-(N-ethyl-N-toluidino)fluoran, 1,2-benzo-6-(N-methyl-N-cyclohexylamino)-fluoran, 1,2-benzo-6-dibutylaminofluoran, 1,2-benzo-6-diethylaminofluran, 2-(a-phenylethylamino)-6-(N-ethyl-p-toluidino)fluoran, 2-(2,3-dichloroanilino)-3-chloro-6-diethylaminofluran, 2-(2,4-dimethylanilino)-3-methyl-6-diethylaminofluoran, 2-(di-p-methylbenzilamino)-6-(N-ethyl-p-toluidino)fluoran, 2-(m-trichloromethylanilino)-3-methyl-6-(N-cyclohexyl-N-methylamino)fluoran, 2-(m-trichloromethylanilino)-3-methyl-6-diethylanimofluoran, 2-(m-trifluoromethylaniline)-6-diethylaminofluoran, 2-(m-trifluoromethylanilino)-3-chloro-6-diethylaminofluran, 2-(m-trifluoromethylanilino)-3-methyl-6-diethylanimofluoran, 2-(N-ethyl-p-toluidino)-3-methyl-6-(N-ethylanilino)fluoran, 2-(N-ethyl-p-toluidino)-3-methyl-6-(N-propyl-p-toluidino) fluoran, 2-(o-chloroanilino)-3-chloro-6-diethlaminofluoran, 2-(o-chloroanilino)-6-dibutylaminofluoran, 2-(o-chloroanilino)-6-diethylaminofluoran, 2-(p-acetylanilino)-6-(N-n-amyl-N-n-butylamino)fluoran, 2,3-dimethyl-6-dimethylaminofluoran, 2-amino-6-(N-ethyl-2,4-dimethylanilino)fluoran, 2-amino-6-(N-ethylanilino)fluoran, 2-amino-6-(N-ethyl-p-chloroanilino)fluoran, 2-amino-6-(N-ethyl-p-ethylanilino)fluoran, 2-amino-6-(N-ethyl-p-toluidino)fluoran, 2-amino-6-(N-methyl-2,4-dimethylanilino)fluoran, 2-amino-6-(N-methylanilino)fluoran, 2-amino-6-(N-methyl-p-chloroanilino)fluoran, 2-amino-6-(N-methyl-p-ethylanilino)fluoran, 2-amino-6-(N-methyl-p-toluidino)fluoran, 2-amino-6-(N-propyl-2,4-dimethylanilino)fluoran, 2-amino-6-(N-propylanilino)fluoran, 2-amino-6-(N-propyl-p-chloroanilino)fluoran, 2-amino-6-(N-propyl-p-ethylanilino)fluoran, 2-amino-6-(N-propyl-p-toluidino)fluoran, 2-anilino-3-chloro-6-diethylaminofluran, 2-anilino-3-methyl-6-(N-cyclohexyl-N-methylamino)fluoran, 2-anilino-3-methyl-6-(N-ethyl--N-isoamylamino)fluoran, 2-anilino-3-methyl-6-(N-ethyl-N-p-benzyl)aminofluoran, 2-anilino-3-methyl-6-(N-ethyl-N-propylamino)fluoran, 2-anilino-3-methyl-6-(N-iso-amyl-N-ethylamino)fluoran, 2-anilino-3-methyl-6-(N-isobutyl-methyl amino)fluoran, 2-anilino-3-methyl-6-(N-isopropyl-methyl amino)fluoran, 2-anilino-3-methyl-6-(N-methyl-p-toluidino-)fluoran, 2-anilino-3-methyl-6-(N-n-amyl-N-ethylamino)fluoran, 2-anilino-3-methyl-6-(N-n-amyl-N-methylamino)fluoran, 2-anilino-3-methyl-6-(N-n-propyl-N-isopropylamino)fluoran, 2-anilino-3-methyl-6-(N-n-propyl-N-methylamino)fluoran, 2-anilino-3-methyl-6-(N-sec-butyl-N-methylamino)fluoran, 2-anilino-3-methyl-6-diethylaminofluoran, 2-anilino-3-methyl-6-di-n-butylaminofluoran, 2-anilino-6-(N-n-hexyl-N-ethylamino)fluoran, 2-benzilamino-6-(N-ethyl-2,4-dimethylanilino)fluoran, 2-benzilamino-6-(N-ethyl-p-toluidino)fluoran, 2-benzilamino-6-(N-methyl-2,4-dimethylanilino)fluoran, 2-benzilamino-6-(N-methyl-p-toluidino)fluoran, 2-bromo-6-diethylaminofluoran, 2-chloro-3-methyl-6-diethylaminofluran, 2-chloro-6-(N-ethyl-N-isoamylamino)fluoran, 2-chloro-6-diethylaminofluoran, 2-chloro-6-dipropylaminofluoran, 2-diethylamino-6-(N-ethyl-p-toluidino)fluoran, 2-diethylamino-6-(N-methyl-p-toluidino)fluoran, 2-dimethylamino-6-(N-ethylanilino)fluoran, 2-dimethylamino-6-(N-methylanilino)fluoran, 2-dipropylamino-6-(N-ethylanilino)fluoran, 2-dipropylamino-6-(N-methylanilino)fluoran, 2-ethylamino-6-(N-ethyl-2,4-dimethylanilino)fluoran, 2-ethylamino-6-(N-methyl-p-toluidino)fluoran, 2-methylamino-6-(N-ethylanilino)fluoran, 2-methylamino-6-(N-methyl-2,4-dimethylanilino)fluoran, 2-methylamino-6-(N-methylanilino)fluoran, 2-methylamino-6-(N-propylanilino)fluoran, 3-(1-ethyl-2-methylindole-3-yl)-3-(2-ethoxy-4-diethylaminophenyl)-4-azaphthalide, 3-(1-ethyl-2-methylindole-3-yl)-3-(2-ethoxy-4-diethylaminophenyl)-7-azaphthalide, 3-(1-ethyl-2-methylindole-3-yl)-3-(2-methyl-4-diethylaminophenyl)-4-azaphthalide, 3-(1-ethyl-2-methylindole-3-yl)-3-(2-methyl-4-diethylaminophenyl)-7-azaphthalide, 3-(1-ethyl-2-methylindole-3-yl)-3-(4-diethylaminophenyl)-4-azaphthalide, 3-(1-ethyl-2-methylindole-3-yl)-3-(4-N-n-amyl-N-methylaminophenyl)-4-azaphthalide, 3-(1-methyl-2-methylindole-3-yl)-3-(2-hexyloxy-4-diethylaminophenyl)-4-azaphthalide, 3-(1-ethyl-2-methylindole-3-yl)-3-(2-ethoxy-4-diethylaminophenyl)-4-azaphthalide, 3-(N-cyclohexyl-N-methylamino)-6-methyl-7-phenylaminofluoran, 3-(N-ethyl-N-isoamylamino)-6-methyl-7-phenylaminofluoran, 3-(N-ethyl-p-toluidino)-6-methyl-7-phenylaminofluoran, 3,3-bis(2-ethoxy-4-diethylaminphenyl)-4-azaphthalide, 3,3-bis(2-ethoxy-4-diethylaminphenyl)-7-azaphthalide, 3,6-dibutoxyfluoran, 3,6-diethoxyfluoran, 3,6-dimethoxyfluoran, 3-bromo-6-cyclohexylaminofluoran, 3-chloro-6-cyclohexylaminofluoran, 3-dibutylamino-7-(o-chlorophenylamino)fluoran, 3-diethylamino-5-methyl-7-dibenzylaminofluoran, 3-diethylamino-6-(m-trifluoromethylanilino)fluoran, 3-diethylamino-6,7-dimethylfluoran, 3-diethylamino-6-methyl-7-xylidinofluoran, 3-diethylamino-7-(2-carbomethoxy-phenylamino)fluoran, 3-diethylamino-7-(N-acetyl-N-methylamino)fluoran, 3-diethylamino-7-(N-chloroethyl-N-methylamino)fluoran, 3-diethylamino-7-(N-methyl-N-benzylamino)fluoran, 3-diethylamino-7-(o-chlorophenylamino)fluoran, 3-diethylamino-7-chlorofluoran, 3-diethylamino-7-dibenzylaminofluoran, 3-diethylamino-7-diethylaminofluoran, 3-diethylamino-7-N-methylaminofluoran, 3-dimethylamino-6-methoxylfluoran, 3-dimethylamino-7-methoxyfluoran, 3-methyl-6-(N-ethyl-p-toluidino)fluoran, 3-piperidino-6-methyl-7-phenylaminofluoran, 3-pyrrolidino-6-methyl-7-p-butylphenylaminofluoran, and 3-pyrrolidino-6-methyl-7-phenylarninofluoran.

Additional dyes that may be alloyed in accordance with the embodiments disclosed herein include, but are not limited to leuco dyes such as fluoran leuco dyes and phthalide color formers as are described in "The Chemistry and Applications of Leuco Dyes," Muthyala, Ramiah, ed., Plenum Press (1997) (ISBN 0-306-45459-9). Embodiments may comprise almost any known leuco dye, including, but not limited to, amino-triarylmethanes, aminoxanthenes, aminothioxanthenes, amino-9,10-dihydro-acridines, aminophenoxazines, aminophenothiazines, aminodihydro-phenazines, aminodiphenylmethanes, aminohydrocinnamic acids (cyanoethanes, leuco methines) and corresponding esters, 2-(p-hydroxyphenyl)-4, 5-diphenylimidazoles, indanones, leuco indamines, hydrozines, leuco indigoid dyes, amino-2, 3-dihydroanthraquinones, tetrahalo-p, p'-biphenols, 2-(p-hydroxyphenyl)-4, 5-diphenylimidazoles, phenethylanilines, and mixtures thereof.

Particularly suitable leuco dyes include: Specialty Yellow 37 (Noveon), NC Yellow 3 (Hodogaya), Specialty Orange 14 (Noveon), Perga Script Black IR (CIBA), and Perga Script Orange IG (CIBA). (registered trademarks)

Additional examples of dyes include: Pink DCF CAS#29199-09-5; Orange-DCF, CAS#21934-68-9; Red-DCF CAS#26628-47-7; Vemmilion-DCF, CAS#117342-26-4; Bis(dimethyl)aminobenzoyl phenothiazine, CAS# 1249-97-4; Green-DCF, CAS#34372-72-0; chloroanilino dibutylaminofluoran, CAS#82137-81-3; NC-Yellow-3 CAS#36886-76-7; Copikem37, CAS#144190-25-0; Copikem3, CAS#22091-92-5, available from Hodogaya, Japan or Noveon, Cincinnati, USA. (registered trademarks)

Additional non-limiting examples of suitable fluoran-based leuco dyes include: 3-diethylamino-6-methyl-7-anilinofluoran, 3-(N-ethyl-p-toluidino)-6-methyl-7-anilinofluoran, 3-(N-ethyl-N-isoamylamino)-6-methyl-7-anilinofluoran, 3-diethylamino-6-methyl-7-(o,p-dimethylanilino)fluoran, 3-pyrrolidino-6-methyl-7-anilinofluoran, 3-piperidino-6-methyl-7-anilinofluoran, 3-(N-cyclohexyl-N-methylamino)-6-methyl-7-anilinofluoran, 3-diethylamino-7-(m-trifluoromethylanilino) fluoran, 3-dibutylamino-6-methyl-7-anilinofluoran, 3-diethylamino-6-chloro-7-anilinofluoran, 3-dibutylamino-7-(o-chloroanilino)fluoran, 3-diethylamino-7-(o-chloroanilino)fluoran, 3-di-n-pentylamino-6-methyl-7-anilinofluoran, 3-di-n-butylamino-6-methyl-7-anilinofluoran, 3-(n-ethyl-n-isopentylamino)-6-methyl-7-anilinofluoran, 3-pyrrolidino-6-methyl-7-anilinofluoran, 1 (3H)-isobenzofluranone, 3-bis [2-[4-(dimethylamino)phenyl]-2-(4-methoxyphenyl)ethenyl] 4,5,6,7-tetrachloro phthalide, and mixtures thereof. Aminotriarylmethane leuco dyes may also be used in embodiments of the present disclosure, such as tris(N,N-dimethylaminophenyl) methane (LCV); tris(N,N-diethylaminophenyl) methane (LECV); tris(N,N-di-n-propylaminophenyl) methane (LPCV); tris(N,N-di-n-butylaminophenyl) methane (LBCV); bis(4-diethylaminophenyl)-(4-diethylamino-2-methyl-phenyl) methane (LV-1); bis(4-diethylamino-2-methylphenyl)-(4-diethylamino-phenyl) methane (LV-2); tris(4-diethylamino-2-methylphenyl) methane (LV-3); bis(4-diethylamino-2-methylphenyl) (3,4-diemethoxyphenyl) methane (LB-8); aminotriarylmethane leuco dyes having different alkyl substituents bonded to the amino moieties wherein each alkyl group is independently selected from C₁-C₄ alkyl; and aminotriarylmethane leuco dyes with any of the preceding named structures that are further substituted with one or more alkyl groups on the aryl rings wherein the latter alkyl groups are independently selected from C₁-C₃ alkyl.

The protected developers may include protected phenols. If sufficient energy is applied to the protected developer in the presence of a deprotection agent, the protective moiety, which may be an acyl group, is deprotected by the deprotection agent, thereby exposing the functional acid group(s) of the developer. The unprotected developer can then react with the leuco dye to form a colored dye. In some embodiments, energy or radiation is supplied in the form of heat, which may in turn be supplied by the absorption of incident light or any other suitable means; and a mark 242 is made by heating a region of markable layer 230 above a threshold temperature. An exemplary deprotection and reaction scheme is illustrated in Figure 2, in which an acyl-protected phenol is deprotected by transfer of the acyl moiety to an amine.

In certain embodiments, the threshold temperature is at least 95°C, or ranges from about 95°C to about 250°C. In other embodiments, a detectable mark is formed when the temperature of the marking layers reaches from about 250°C to about 400 °C.

### Developers

A wide variety of developers can be protected using various protective moieties. Attachment of a protective moiety onto a developer by a chemical bond(s) can be carried out according to conventionally known methods such as those described in Greene, TW and Wuts, PGM "Protective Groups in Organic Synthesis", John Wiley, N.Y., 2nd Edition (1991), (see especially pages 246-292). Another resource describing such mechanisms is J. F. W. McOmie, "Protective Groups in Organic Chemistry", Plenum Press (1973).

Although a variety of methods can be utilized to form the protected developers, such as those described in Greene and McOmie, the following examples illustrate several mechanisms for protecting an acid developer. Phenolic and catechol developers can be protected by acylation and condensation reactions with an acyl chloride, acyl anhydride, or activated ester such as succinimidyl ester. Such acylation and condensation reactions can be performed in the presence of a base, such as NaOH, or simply by heating. Alternatively, the reaction can be performed by mixing an amine such as triethyl amine with a dipolar aprotic solvent e.g. acetonitrile or dioxane, followed by an aqueous work up (addition of water and subsequent extraction of the protected developer using ether or the like) or evaporation and purification.

More specifically, the developers may contain various functional groups, such as, hydroxy, thio and amine groups, which act as Lewis acids. After the protective moiety reacts with the functional group, the resulting protected developer can be an ester, ether, sulfonate, carbonate, carbamate, or phosphinate. Examples of specific protected developers include trifluoroacetate, 2-trimethylsilyl ethyl ester, t-butyl ester, p-nitrobenzyl ester, nitrobutyl ester, and trichloroethyl ester.

Examples of acidic materials that may be used as developers include, without limitation, phenols, carboxylic acids, cyclic sulfonamides, protonic acids, and compounds having a pKa of less than about 7.0, and mixtures thereof. Specific phenolic and carboxylic developers can include, without limitation, boric acid, oxalic acid, maleic acid, tartaric acid, citric acid, succinic acid, benzoic acid, stearic acid, gallic acid, salicylic acid, 1-hydroxy-2-naphthoic acid, o-hydroxybenzoic acid, m-hydroxybenzoic acid, 2-hydroxy-p-toluic acid, 3,5-xylenol, thymol, p-t-butylphenyl, 4-hydroxyphenoxide, methyl-4-hydroxybenzoate, 4-hydroxyacetophenone, α-naphthol, naphthols, catechol, resorcin, hydroquinone, 4-t-octylcatechol, 4,4'-butylidenephenol, 2,2'-dihydroxydiphenyl, 2,2'-methylenebis(4-methyl-6-t-butyl-phenol), 2,2'-bis(4'-hydroxyphenyl)propane, 4,4'-isopropylidenebis(2-t-butylphenol), 4,4'-secbutylidenediphenol, pyrogallol, phloroglucine, phlorogluocinocarboxylic acid, 4-phenylphenol, 2,2'-methylenebis(4-chlorophenyl), 4,4'-isopropylidenediphenol, 4,4'-isopropylidenebis(2- chlorophenol), 4,4'-isopropylidenebis(2-methylphenol), 4,4'-ethylenebis(2-methylphenol), 4,4'-thiobis(6-t-butyl-3-methylphenol), bisphenol A and its derivatives (such as 4,4'-isopropylidenediphenol(bisphenol A)), 4-4'-cyclohexylidenediphenol, p,p'-(1-methyl-n-hexylidene) diphenol, 1,7-di(4-hydroxyphenylthio)-3,5-di-oxaheptane), 4-hydroxybenzoic esters, 4-hydroxyphthalic diesters, phthalic monoesters, bis(hydroxyphenyl)sulfides, 4-hydroxyarylsulfones, 4-hydroxyphenylarylsulfonates, 1,3-di[2-(hydroxyphenyl)-2-propyl]benzenes, 1,3-dihydroxy-6(α,α-dimethylbenzyl)benzene, resorcinols, hydroxybenzoyloxybenzoic esters, bisphenolsulfones, bis-(3-allyl-4-hydroxyphenyl)sulfone (TG-SA), bisphenolsulfonic acids, 2,4-dihydroxy-benzophenones, novolac type phenolic resins, polyphenols, saccharin, 4-hydroxy-acetophenone, p-phenylphenol, benzyl-p-hydroxybenzoate(benzalparaben), 2,2-bis(p-hydroxyphenyl) propane, p-tertbutylphenol, 2,4-dihydroxy-benzophenone, hydroxy benzyl benzoates, and p-benzylphenol.

In one embodiment, the developer is a phenolic compound. In a more detailed aspect, the developer can be a bisphenol, such as bis(4-hydroxy-3-allylphenyl) sulphone (TG-SA). In yet another embodiment, the developer compound is a carboxylic acid selected from the group consisting of boric acid, oxalic acid, maleic acid, tartaric acid, citric acid, succinic acid, benzoic acid, stearic acid, gallic acid, salicylic acid, ascorbic acid, and mixtures thereof.

### Protective moieties

As mentioned above, the functional groups of the developers disclosed herein are each protected by a protective moiety. In one aspect, the protective moiety provides a mechanism for protecting the acid functional group of the developer. If the functional group of the developer is a hydroxy group, suitable protecting groups include, for example esters, sulfonates, ethers, phosphinates, carbonates, carbamates (i.e. esters of carbamic acid), and mixtures thereof. In one embodiment, the protective moiety is an acyl group.

A variety of ethers can be used as protective moieties, such as, for example, silyl ethers, alkyl ethers, aromatic ethers, and mixtures thereof. Several non-limiting examples of ethers suitable for use in the present disclosure include methyl ether, 2-methoxyethoxymethyl ether (MEM), cyclohexyl ether, o-nitrobenzyl ether, 9-anthryl ether, tetrahydrothiopyranyl, tetrahydrothiofuranyl, 2-(phenylselenyl)ethyl ether, benzyloxymethyl ethers, methoxyethoxymethyl ethers, 2-(trimethylsilyl)ethoxymethyl ether, methylthiomethyl ether, phenylthiomethyl ether, 2,2-dichloro-1,1-difluoroethyl ether, tetrahydropyranyl, phenacyl, phenylacetyl, propargyl, p-bromophenacyl, cyclopropylmethyl ether, allyl ether, isopropyl ether, t-butyl ether, benzyl ether, 2,6-dimethylbenzyl ether, 4-methoxybenzyl ether, o-nitrobenzyl ether, 2-bromoethyl ether, 2,6-dichlorobenzyl ether, 4-(dimethylaminocarbonyl)benzyl ether, 9-anthrymethyl ether, 4-picolyl ether, heptafluoro-p-tolyl ether, tetrafluoro-4-pyridyl ether, silyl ethers (e.g., trimethylsilyl, t-butyldimethylsilyl, t-butyldiphenylsilyl, butyidiphenylsilyl, tribenzylsilyl, triisopropylsilyl, isopropyldimethylsilyl, 2-trimethylsilyl, 2-(trimethylsilyl) ethoxymethyl (SEM) ether, and mixtures thereof.

Several non-limiting examples of esters suitable for use as protective moieties in the present invention include formate ester, acetate ester, isobutyrate ester, levulinate ester, pivaloate ester, aryl pivaloate esters, aryl methanesulfonate esters, adamantoate ester, benzoate ester, 2,4,6-trimethylbenzoate (mesitoate) ester, 2-trimethyl silyl ester, 2-trimethylsilyl ethyl ester, t-butyl ester, p-nitrobenzyl ester, nitrobutyl ester, trichloroethyl ester, any alkyl branched or aryl substituted ester, 9-fluorenecarboxylate, xanthenecarboxylate, and mixtures thereof. In one embodiment, the protective moiety can be any of formate, acetate, isobutyrate, levulinate, pivaloate, and mixtures thereof.

Several non-limiting examples of carbonates and carbamates suitable for use as protective moieties include 2,2,2-trichloroethyl carbonate, vinyl carbonate, benzyl carbonate, methyl carbonate, p-nitrophenyl carbonate, p-nitrobenzyl carbonate, S-benzyl thiocarbonate, N-phenylcarbamate, 1-adamantyl carbonate, t-butyl carbonate, 4-methylsulfinylbenzyl, 2,4-dimethylbenzyl, 2,4-dimethylpent-3-yl, aryl carbamates, methyl carbamate, benzyl carbamate, cyclic borates and carbonates, and mixtures thereof.

Several non-limiting examples of suitable phosphinates include dimethylphosphinyl, dimethylthiophosphinyl, dimethylphosphinothioyl, diphenylphosphothioyl, and mixtures thereof.

Several non-limiting examples of sulfonates suitable for use in embodiments of the present disclosure include methanesulfonate, toluenesulfonate, 2-formylbenzenesulfonate, and mixtures thereof.

Exemplary protective moieties for hydroxyl functional groups of developers include, for example, t-butyloxycarbonyl, allyloxycarbonyl, benzyloxycarbonyl, o-nitrobenzyloxycarbonyl, and trifluoroacetate.

### Deprotection agents

In order to facilitate removal of the protective moiety from the protected developer, preferred embodiments of marking layer 130 include a deprotection agent. This ingredient facilitates removal of the protective moiety from the developer, thereby allowing the color-forming reaction to occur. In some embodiments, transfer of the protective moiety is stimulated by the application of heat. In some embodiments, the deprotection agent provides a mechanism for removing the above-described protective moieties via a chemical reaction therewith. Although it is recognized that the chemistry of some protective moieties would not always require a separate deprotection agent, such deprotection agents are considered to improve, at least in some instances, the stability and development of the leuco dyes in accordance with the principles of the present disclosure.

Suitable deprotection agents include, without limitation, amines such as α-hydroxy amines, α-amino alcohols, primary amines and secondary amines. In one aspect of the present invention, the deprotection agent can be valoneol, prolinol, 2-hydroxy-1-amino-propanol, 2-amino-3-phenyl-1-propanol, (R)-(-)-2-phenyl glycinol, 2-amino-phenylethanol, 1-naphthylethyl amine, 1-aminonaphthalene, morpholin, and the like. In another aspect, suitable deprotection agents include amines such as those boiling above 95°C and more preferably above 110°C, including but not limited to 2-amino-3-phenyl-1-propanol, (R)-(-)-2-phenyl glycinol, 2-amino-phenylethanol, or others, such as 1-naphthyl ethyl amine, 1-aminonaphthalene, morpholin, and the like.

The deprotection agent can be present at any concentration that is sufficient to react with enough protective moieties to allow a detectable color change in the leuco dye at the intended level of heat input. It will be understood that the concentration of the deprotection agent can be tailored to affect the speed and degree of the reaction upon exposure to heat. However, as a general guideline, the deprotection agent to developer molar ratio can range from about 10:1 to about 1:4, and in certain embodiments can range from about 1:1 to about 1:2.

In one embodiment, the color forming compositions disclosed herein can include from about 6% to about 45% by weight of protected developer. In another embodiment, the protected developer may be present in an amount ranging from about 20% to about 40% by weight. In still a further detailed aspect, the protected developer may be present in an amount ranging from about 25% to about 38% by weight.

As mentioned above, when the color-forming agent 240 includes a color former, such as a leuco dye, and a protected developer, the matrix can be provided as a homogeneous, single-phase solution at ambient conditions because the use of a protective moiety on the developer prevents the color-forming reaction from occurring prior to activation. Nonetheless, in other embodiments, one or the other of the components may be substantially insoluble in the matrix at ambient conditions. By "substantially insoluble," it is meant that the solubility of that component of the color-forming agent 240 in the matrix at ambient conditions is so low, that no or very little color change occurs due to reaction of the dye and the developer at ambient conditions. Thus, in some embodiments, the developer is dissolved in the matrix with the dye being present as small crystals suspended in the matrix at ambient conditions; while in other embodiments, the color-former is dissolved in the matrix and the developer is present as small crystals suspended in the matrix at ambient conditions. When a two-phase system is used, the particle size is ½ λ (wavelength) of the radiation in some embodiments, and less than 400 nm in other embodiments.

Laser light having blue, indigo, red and far-red wavelength ranges from about 380 nm to about 420 nm; or from about 630 nm to about 680 nm; or from about 770 nm to about 810 nm can be used to develop the present color-forming compositions. Therefore, color-forming compositions may be selected for use in devices that emit wavelengths within this range. For example, if the light source emits light having a wavelength of about 405 nm, the precursor can be selected to absorb and rearrange at or near that wavelength. In other embodiments, light sources of other wavelengths, including but not limited to 650 nm or 780 nm, can be used. In either case, a radiation absorber tuned to the selected wavelength can be included so as to enhance localized heating. Radiation absorbers suitable for this purpose are known.

In some embodiments, for example, the light source may operate within a range of wavelengths from about 770 nm to about 810 nm. In general, in addition to the ranges given above, any of the ranges of light source displayed in Table 1 may be used to develop contrast in embodiments of the present disclosure.

**Table 1**

| Laser Sources | | | | | | | | |
|---|---|---|---|---|---|---|---|---|
| Wavelength | | | Emission, perpendicular | Light Output (Emission) | Current | Voltage | Input | Efficiency |
| min | typ | max | Angle | | | nominal | Power | |
| nm | Nm | nm | Degrees | mW | mA | V | mW | % |
| 370 | 375 | 380 | 24 | 10 | 70 | 5 | 350 | 3% |
| 400 | 408 | 415 | 23 | 30 | 45 | 4.5 | 203 | 15% |
| 435 | 440 | 445 | 22 | 20 | 40 | 5 | 200 | 10% |
| 468 | 473 | 478 | 22 | 5 | 40 | 5 | 200 | 3% |
| 650 | 656 | 660 | 22 | 50 | 80 | 2.6 | 208 | 24% |
| 780 | 784 | 787 | 16 | 100 | 141 | 2.1 | 296 | 34% |
| 970 | 980 | 990 | 18 | 200 | 270 | 1.76 | 475 | 42% |
| 1520 | 1550 | 1580 | 18 | 10 | 50 | 3 | 150 | 7% |

Common CD-buming lasers have a wavelength of about 780 nm and can be adapted for use as a radiation sources in conjunction with embodiments of the present disclosure. Examples of radiation absorbers that are suitable for use in the infrared range can include, but are not limited to, polymethyl indoliums, metal complex IR dyes, indocyanine green, polymethine dyes such as pyrimidinetrione-cyclopentylidenes, guaiazulenyl dyes, croconium dyes, cyanine dyes, squarylium dyes, chalcogenopyryloarylidene dyes, metal thiolate complex dyes, bis(chalcogenopyrylo)polymethine dyes, oxyindolizine dyes, bis(aminoaryl)polymethine dyes, indolizine dyes, pyrylium dyes, quinoid dyes, quinone dyes, phthalocyanine dyes, naphthalocyanine dyes, azo dyes, hexafunctional polyester oligomers, heterocyclic compounds, and combinations thereof. Several specific polymethyl indolium compounds are available from Aldrich Chemical Company and include 2-[2-(2-chloro-3-[2-(1,3-dihydro-1,3,3-trimethyl-2H-indo)-2-ylidene)-ethylidene]-1-cyclopenten-1-yl-ethenyl]-1,3,3-trimethyl-3H-indolium perchlorate; 2-[2-[2-Chloro-3-[2-(1,3-dihydro-1,3,3-trimethyl-2H-indol-2-ylidene)-ethylidene]-1-cyclopenten-1-yl-ethenyl]-1,3,3-trimethyl-3H-indolium chloride; 2-[2-[2-chloro-3-[(1,3-dihydro-3,3-dimethyl-1-propyl-2H-indol-2-ylidene)ethylidene]-11-cyclohexen-1-yl]ethenyl]-3,3-dimethyl-1-propylindolium iodide; 2-[2-[2-chloro-3-[(1,3-dihydro-1,3,3-trimethyl-2H-indol-2-ylidene)ethylidene]-1-cyclohexen-1-yl]ethenyl]-1,3,3-trimethylindolium iodide; 2-[2-[2-chloro-3-[(1,3-dihydro-1,3,3-trimethyl-2H-indol-2-ylidene)ethylidene]-1-cyclohexen-1-yl]ethenyl]-1,3,3-trimethylindolium perchlorate; 2-[2-[3-[(1,3-dihydro-3,3-dimethyl-1-propyl-2H-indol-2-ylidene)ethylidene-]-2-(phenylthio)-1-cyclohexen-1-yl]ethenyl]-3,3-dimethyl-1-propylindolium perchlorate; and mixtures thereof. Alternatively, the radiation absorber can be an inorganic compound, e.g., ferric oxide, carbon black, selenium, or the like. Polymethine dyes or derivatives thereof (such as a pyrimidinetrione-cyclopentylidene), squarylium dyes (such as guaiazulenyl dyes), croconium dyes, or mixtures thereof can also be used. Suitable infrared sensitive pyrimidinetrione-cyclopentylidene radiation absorbers include, for example, 2,4,6(1H,3H,5H)-pyrimidinetrione 5-[2,5-bis[(1,3-dihydro-1,1,3-dimethyl-2H-indol-2-ylidene)ethylidene]cyclopentylidene]-1,3-dimethyl-(9Cl) (S0322 available from Few Chemicals, Germany).

In other embodiments, a radiation absorber can be included that preferentially absorbs wavelengths in the range from about 600 nm to about 720 nm and more specifically at about 650 nm. Non-limiting examples of suitable radiation absorbers for use in this range of wavelengths can include indocyanine dyes such as 3H-indolium, 2-[5-(1,3-dihydro-3,3-dimethyl-1-propyl-2H-indol-2-ylidene)-1,3-pentadienyl]-3,3-dimethyl-1-propyl-iodide), 3H-indolium, 1-butyl-2-[5-(1-butyl-1,3-dihydro-3,3-dimethyt-2H-indo)-2-ylidene)-1,3-pentadienyl]-3,3-dimethyl-perchlorate, and phenoxazine derivatives such as phenoxazin-5-ium, 3,7-bis(diethylamino)perchlorate. Phthalocyanine dyes such as silicon 2,3-napthalocyanine bis(trihexylsilyloxide) and matrix soluble derivatives of 2,3-napthalocyanine (both commercially available from Aldrich Chemical), matrix soluble derivatives of silicon phthalocyanine (as described in Rodgers, A. J. et al., 107 J. Phys. Chem. A 3503-3514, May 8, 2003), matrix soluble derivatives of benzophthalocyanines (as described in Aoudia, Mohamed, 119 J. Am. Chem. Soc. 6029-6039, Jul. 2, 1997), phthalocyanine compounds such as those described in U.S. Pat. Nos. 6,015,896 and 6.025,486, and Cirrus 715 (registered trademarks), a phthalocyanine dye available from Avecia, Manchester, England, may also be used.

In still other embodiments, a radiation source, such as a laser or LED, that emits light having blue and indigo wavelengths ranging from about 380 nm to about 420 nm may be used. In particular, radiation sources such as the lasers used in certain DVD and laser disk recording equipment emit energy at a wavelength of about 405 nm. Radiation absorbers that most efficiently absorb radiation in these wavelengths may include, but are not limited to, aluminum quinoline complexes, porphyrins, porphins, and mixtures or derivatives thereof. Some specific examples of suitable radiation absorbers suitable for use with radiation sources that output radiation between 380 and 420 nm include 1-(2-chloro-5-sulfophenyl)-3-methyl-4-(4-sulfophenyl)azo-2-pyrazolin-5-one disodium salt; ethyl 7-diethylaminocoumarin-3-carboxylate; 3,3'-diethylthiacyanine ethylsulfate; 3-allyl-5-(3-ethyl-4-methyl-2-thiazolinylidene) rhodanine (each available from Organica Feinchemie GmbH Wolfen), and mixtures thereof. Other examples of suitable radiation absorbers include aluminum quinoline complexes such as tris(8-hydroxyquinolinato) aluminum (CAS 2085-33-8) and derivatives such as tris(5-cholor-8-hydroxyquinolinato) aluminum (CAS 4154-66-1), 2-(4-(1-methyl-ethyl)-phenyl)-6-phenyl-4H-thiopyran-4-ylidene)-propanedinitril-1,1-dioxide (CAS 174493-15-3), 4,4'-[1,4-phenylenebis(1,3,4-oxadiazole-5,2-diyl)]bis N,N-diphenyl benzeneamine (CAS 184101-38-0), bis-tetraethylammonium-bis(1,2-dicyano-dithiolto)-zinc(II) (CAS 21312-70-9), 2-(4,5-dihydronaphtho[1,2-d]-1,3-dithiol-2-ylidene)-4,5-dihydro-naphtho[1-,2-d]1,3-dithiole, all available from Syntec GmbH. Other examples of specific porphyrin and porphyrin derivatives can include etioporphyrin 1 (CAS 448-71-5), deuteroporphyrin IX 2,4 bis ethylene glycol (D630-9) available from Frontier Scientific, and octaethyl porphrin (CAS 2683-82-1), azo dyes such as Mordant Orange CAS 2243-76-7, Methyl Yellow (60-11-7), 4-phenylazoaniline (CAS 60-09-3), Alcian Yellow (CAS 61968-76-1), available from Aldrich chemical company, and mixtures thereof. (registered trademarks)

The matrix material can be any composition suitable for dissolving and/or dispersing the developer, and color-former (or color-former/melting aid alloy). Acceptable matrix materials include, by way of example, UV-curable matrices such as acrylate derivatives, oligomers and monomers, with or without a photo package. A photo package may include a light-absorbing species which initiates reactions for curing of a matrix, such as, by way of example, benzophenone derivatives. Other examples of photoinitiators for free radical polymerization monomers and pre-polymers include, but are not limited to, thioxanethone derivatives, anthraquinone derivatives, acetophenones and benzoine ether types. It may be desirable to choose a matrix that can be cured by a form of radiation other than the type of radiation that causes a color change.

Matrices based on cationic polymerization resins may require photo-initiators based on aromatic diazonium salts, aromatic halonium salts, aromatic sulfonium salts and metallocene compounds. An example of an acceptable matrix or matrices includes Nor-Cote CLCDG-1250A or Nor-Cote CDG000 (mixtures of UV curable acrylate monomers and oligomers), which contains a photoinitiator (hydroxy ketone) and organic solvent acrylates (e.g., methyl methacrylate, hexyl methacrylate, beta-phenoxy ethyl acrylate, and hexamethylene acrylate). Other acceptable matrixes or matrices include acrylated polyester oligomers such as CN292, CN293, CN294, SR351 (trimethylolpropane tri acrylate), SR395 (isodecyl acrylate), and SR256 (2(2-ethoxyethoxy) ethyl acrylate) available from Sartomer Co.

The ability of the deprotection agents to de-protect the developers is limited when the solid matrix is below its glass transition temperature (T_{g}). Thus, in some embodiments, it is preferred to provide sufficient photothermal energy in the region of the desired mark to locally heat the matrix above a threshold temperature, which may be its glass transition temperature T_{g}. T_{g} typically depends on the polymer composition of the matrix, and can be selected, if desired, by selecting the polymer that is used for the matrix. In some embodiments, T_{g} will preferably be in the range of 90 to 200 °C. More preferred ranges are 120-140°C, with some embodiments being markable at 95°C.

The imaging compositions formed in the manner described herein can be applied to the surface of an optical recording medium such as a CD, DVD, HD-DVD, BLU-RAY disc or the like. Further, discs incorporating embodiments of the present disclosure can be used in systems that include optical recording and/or reading capabilities. Such systems typically include a laser emitting light having a predetermined wavelength and power. Systems that include optical reading capability further include an optical pickup unit coupled to the laser. Lasers and optical pickup units are known in the art.

Referring again to Figures 1 and 2, an exemplary read/write system 170 includes a processor 166, a laser 150, and an optical pickup 157. Signals 163 from processor 166 cause laser 150 to emit light at the desired power level. Light reflected from the disc surface is detected by pickup 157, which in turn sends a corresponding signal 165 back to processor 166.

When it is desired to record a disc 100 incorporating an embodiment of the present disclosure, the disc 100 is positioned such that light emitted by laser 150 is incident on the marking surface. The laser 150 is operated such that the light incident on the marking layer transfers sufficient energy to the surface to cause a mark, such as at 242. Both the laser 150 and the position of the disc 100 are controlled by a processor 166 such that light is emitted by the laser in pulses that form a pattern of marks 242 on the surface of the disc 100.

When it is desired to read a pattern of marks on the surface of a disc 100, the disc 100 is again positioned such that light emitted by laser 150 is incident on the marked surface. The laser 150 is operated such that the light incident at the surface does not transfer sufficient energy to the surface to cause a mark. Instead the incident light is reflected from the marked surface to a greater or lesser degree, depending on the absence or presence of a mark. As the disc 100 moves, changes in reflectance are recorded by optical pickup 157 which generates a signal 165 corresponding to the marked surface. Both the laser 150 and the position of the disc 100 are controlled by the processor during the reading process.

It will be understood that the read/write system described herein is merely exemplary and includes components that are understood in the art. Various modifications can be made, including the use of multiple lasers, processors, and/or pickups, and/or the use of light having different wavelengths. The read components may be separated from the write components, or may be combined in a single device. In some embodiments, discs incorporating embodiments of the present disclosure can be used with optical read/write equipment operating at wavelengths ranging between 380 nm and 420 nm.

To further illustrate the embodiment(s) of the present disclosure, examples are given herein. It is to be understood that these examples are provided for illustrative purposes and are not to be construed as limiting the scope of the disclosed embodiment(s).

### EXAMPLES

### Example 1

A dispersion of 8 WT % Leuco dye, Specialty yellow 37, available from Noveon Corporation, Cincinnati, Ohio; 0.2 wt % s0511 absorber (Few Chemicals, Germany), 10 wt% 2-hydroxy-1-amino-propanol, 25 wt% acetyl TG-SA (protected activator), 20 wt% cellulose butyl acetate as a binder, with the balance being methyl ethyl ketone as prepared. The color forming solution was applied to a glass substrate and dried under vacuum to form a film. Light energy was then applied using a laser of 405 nm band at about 11 mW power for about 100 microseconds. The following reaction resulted in intense yellow color dots having an optical density greater than 0.2 Abs units at 405 nm band.

### Example 2

A dispersion of 5 wt% Leuco dye NC Yellow 3, (available from Hodogaya Corporation, Japan); 10 wt%-hydroxy-1-amino-propanol, 25 wt % acetyl TG-SA (protected activator), and 0.2% S0511 absorber (Few Chemicals, Germany) in 45 wt% CDG000 UV curable binder available from Nor cote Inc. was prepared. The color forming dispersion was applied to a polycarbonate substrate, and the resulting film was cured using UV radiation. Light energy was then applied using a laser of 405nm band at about 11 mmW power for about 100 microseconds. A similar reaction as shown in Example 1 resulted in intense black color dots having an optical density of 0.4Abs units at 405 nm band.

## Claims

1. An optical data recording medium (100) adapted for reading optically recordable data therefrom, comprising:
a substrate (220); and
a markable coating (230) comprising a color forming agent,
the markable coating established on the substrate (220),
the color-forming agent (240) comprising:
a leuco dye;
a developer;
a deprotection agent; and
a protective moiety on either the dye or the developer;
wherein the markable coating (230) includes a radiation absorber.

2. The optical data recording medium (100) according to claim 1 wherein the developer includes a phenolic compound protected by an acyl protective moiety, wherein the deprotection agent includes an amine, and wherein elevation of a matrix including the color-forming agent (240) above a threshold temperature by adding radiation of a predetermined wavelength causes the acyl protective moiety to be removed by the deprotection agent, resulting in a deprotected developer that reacts with the leuco dye.

3. The optical data recording medium (100) according to claims 1 or 2 wherein if the leuco dye, the developer and the deprotection agent, alone or in combination with each other, form particles in a matrix, the particles are 1 µm or less in size.

4. The optical data recording medium (100) according to claims 1 or 2 wherein the leuco dye, the developer and the deprotection agent substantially dissolve in a matrix and, alone or in combination with each other, form substantially no particles in the matrix.

5. The optical data recording medium (100) according to any of claims 1 through 4 wherein the markable coating (230) forms an optically readable layer of 1 µm or less thickness on the optical data recording medium (100).

6. The optical data recording medium (100) according to any of claims 1 through 5 wherein the layer (230) is transparent.

7. The optical data recording medium (100) according to any of claims 2 through 6 wherein the predetermined wavelength of the added radiation is selected from the group consisting of 370 nm to 380 nm, 380 nm to 420 nm, 400 nm to 415 nm, 468 nm to 478 nm, 650 nm to 660 nm, 780 nm to 787 nm, 970 nm to 990 nm, and 1520 nm to 1580 nm.

8. A method for optically recording data, comprising:
providing an optical data recording medium (100) according to claim 1; and
using effecting radiation having a predetermined wavelength to form an optically detectable mark (242) in the markable coating (230).

9. An optical recording system, comprising:
an optical data recording medium (100) according to claim 1; and
a light source (150) positioned so as to illuminate the optical data recording medium (100) in a desired manner so as to cause localized heating that causes the protective moiety to move from the developer such that the developer reacts with the leuco dye.

10. An apparatus for recording optical data, comprising:
an optical data recording medium (100) according to claim 1; and
a recording device (170) including a light source (150).

11. A method for reading optically recorded data, comprising:
providing an optical data recording medium (100) according to claim 1;
using light radiation below a wavelength suitable for forming an optically detectable mark (242) in the at least one markable coating (230), the light radiation illuminating and reflecting light from previously formed optically detectable marks (242);
detecting, by a sensor (158), at least one readable pattern of the optically detectable marks (242) illuminated by the light radiation on the optical data recording medium (100), the sensor (158) reading the at least one readable pattern as the optical data recording medium (100) moves in relation to the sensor (158); and
sending from the sensor (158) to a processor (166) at least one signal based on the at least one readable pattern detected by the sensor (158) from the optical data recording medium (100).

12. The method according to claim 11, further comprising:
analyzing the at least one signal sent to the processor (166) so that the at least one signal can be collected as data in a computer;
collecting the data in a computer database; and
accessing the data in the computer database.

13. An apparatus for transmitting optical data, comprising:
an optical data recording medium (100) according to claim 1;
a light source (150) positioned so as to illuminate with light the optical data recording medium (100) in a desired manner so as to cause at least one optically detectable mark (242) formed in the markable coating (230) to reflect light from the light source (150), the light from the light source (150) illuminating the optical data recording medium (100) with radiation below a wavelength suitable for forming an optically detectable mark (242) in the markable coating (230);
a sensor (158) positioned so as to detect at least one readable pattern of the at least one optically detectable mark (242), the sensor (158) reading the at least one readable pattern as the optical data recording medium (100) moves in relation to the sensor (158); and
a processor (166) to which the sensor (158) sends at least one signal based on the at least one readable pattern detected by the sensor (158).

## Patentansprüche

1. Ein optisches Datenaufzeichnungsmedium (100), das zum Lesen optisch aufzeichenbarer Daten von demselben angepasst ist, das folgende Merkmale aufweist:
ein Substrat (220); und
eine markierbare Beschichtung (230), die ein Farbbildungsmittel aufweist, wobei die markierbare Beschichtung auf dem Substrat (220) hergestellt ist, wobei das Farbbildungsmittel (240) folgende Merkmale aufweist:
einen Leuko-Farbstof;
einen Entwickler;
ein Entschützungsmittel; und
einen Schutzanteil auf entweder dem Farbstoff oder dem Entwickler;
wobei die markierbare Beschichtung (230) einen Strahlungsabsorbierer umfasst.

2. Das optische Datenaufzeichnungsmedium (100) gemäß Anspruch 1, bei dem der Entwickler eine Phenolverbindung, die durch einen Acyl-Schutzanteil geschützt ist, umfasst, wobei das Entschützungsmittel ein Amin umfasst, und wobei eine Anhebung einer Matrix, die das Farbbildungsmittel 240 umfasst, über eine Schwellentemperatur durch Zugabe von Strahlung einer vorbestimmten Wellenlänge bewirkt, dass der Acyl-Schutzanteil durch das Entschützungsmittel entfernt wird, was zu einem entschützten Entwickler, der mit dem Leuko-Farbstoff reagiert, führt.

3. Das optische Datenaufzeichnungsmedium (100) gemäß Anspruch 1 oder 2, bei dem, wenn der Leuko-Farbstoff, der Entwickler und das Entschützungsmittel, alleine oder in Kombination miteinander, Teilchen in einer Matrix bilden, die Teilchen eine Größe von 1 µm oder weniger aufweisen.

4. Das optische Datenaufzeichnungsmedium (100) gemäß Anspruch 1 oder 2, bei dem der Leuko-Farbstoff, der Entwickler und das Entschützungsmittel sich in einer Matrix im Wesentlichen lösen und, alleine oder in Kombination miteinander, im Wesentlichen keine Teilchen in der Matrix bilden.

5. Das optische Datenaufzeichnungsmedium (100) gemäß einem der Ansprüche 1 bis 4, bei dem die markierbare Beschichtung (230) eine optisch lesbare Schicht mit einer Dicke von 1 µm oder weniger auf dem optischen Datenaufzeichnungsmedium (100) bildet.

6. Das optische Datenaufzeichnungsmedium (100) gemäß einem der Ansprüche 1 bis 5, bei dem die Schicht (230) transparent ist.

7. Das optische Datenaufzeichnungsmedium (100) gemäß einem der Ansprüche 2 bis 6, bei dem die vorbestimmte Wellenlänge der zugegebenen Strahlung aus der Gruppe ausgewählt ist, die 370 nm bis 380 nm, 380 nm bis 420 nm, 400 nm bis 415 nm, 468 nm bis 478 nm, 650 nm bis 660 nm, 780 nm bis 787 nm, 970 nm bis 990 nm und 1520 nm bis 1580 nm umfasst.

8. Ein Verfahren zum optischen Aufzeichnen von Daten, das folgende Schritte aufweist:
Bereitstellen eines optischen Datenaufzeichnungsmediums (100) gemäß Anspruch 1; und
Einsetzen eines Verursachens von Strahlung mit einer vorbestimmten Wellenlänge, um eine optisch erfassbare Markierung (242) in der markierbaren Beschichtung (230) zu bilden.

9. Ein optisches Aufzeichnungssystem, das folgende Merkmale aufweist:
ein optisches Datenaufzeichnungsmedium (100) gemäß Anspruch 1; und
eine Lichtquelle (150), die so positioniert ist, um das optische Datenaufzeichnungsmedium (100) in einer erwünschten Art und Weise zu beleuchten, um so eine lokalisierte Erwärmung zu bewirken, die bewirkt, dass der Schutzanteil sich derart von dem Entwickler bewegt, dass der Entwickler mit dem Leuko-Farbstoff reagiert.

10. Ein Gerät zum Aufzeichnen optischer Daten, das folgende Merkmale aufweist:
ein optisches Datenaufzeichnungsmedium (100) gemäß Anspruch 1; und
eine Aufzeichnungsvorrichtung (170), die eine Lichtquelle (150) umfasst.

11. Ein Verfahren zum Lesen optisch aufgezeichneter Daten, das folgende Schritte aufweist:
Bereitstellen eines optischen Datenaufzeichnungsmediums (100) gemäß Anspruch 1;
Einsetzen von Lichtstrahlung unterhalb einer Wellenlänge, die geeignet ist zum Bilden einer optisch erfassbaren Markierung (242) in der zumindest einen markierbaren Beschichtung (230), wobei die Lichtstrahlung zuvor gebildete, optisch erfassbare Markierungen (242) beleuchtet und Licht von denselben reflektiert;
Erfassen zumindest eines lesbaren Musters der optisch erfassbaren Markierungen (242), die durch die Lichtstrahlung beleuchtet werden, auf dem optischen Datenaufzeichnungsmedium (100) durch einen Sensor (158), wobei der Sensor (158) das zumindest eine lesbare Muster liest, wenn sich das optische Datenaufzeichnungsmedium (100) in Bezug auf den Sensor (158) bewegt; und
Senden zumindest eines Signals basierend auf dem zumindest einen lesbaren Muster, das durch den Sensor (158) von dem optischen Datenaufzeichnungsmedium (100) erfasst wird, von dem Sensor (158) an einen Prozessor (166).

12. Das Verfahren gemäß Anspruch 11, das ferner folgende Schritte aufweist:
Analysieren des zumindest einen Signals, das an den Prozessor (166) gesendet wird, so dass das zumindest eine Signal in einem Computer als Daten gesammelt werden kann;
Sammeln der Daten in einer Computerdatenbank; und
Zugreifen auf die Daten in der Computerdatenbank.

13. Ein Gerät zum Übertragen optischer Daten, das folgende Merkmale aufweist:
ein optisches Datenaufzeichnungsmedium (100) gemäß Anspruch 1;
eine Lichtquelle (150), die so positioniert ist, um das optische Datenaufzeichnungsmedium (100) in einer erwünschten Weise mit Licht zu beleuchten, um so zu bewirken, dass zumindest eine optisch erfassbare Markierung (242), die in der markierbaren Beschichtung (230) gebildet ist, Licht von der Lichtquelle (150) reflektiert, wobei das Licht von der Lichtquelle (150) das optische Datenaufzeichnungsmedium (100) mit Strahlung unterhalb einer Wellenlänge beleuchtet, die geeignet ist zum Bilden einer optisch erfassbaren Markierung (242) in der markierbaren Beschichtung (230);
einen Sensor (158), der so positioniert ist, um zumindest ein lesbares Muster der zumindest einen optisch erfassbaren Markierung (242) zu erfassen, wobei der Sensor (158) das zumindest eine lesbare Muster liest, wenn sich das optische Datenaufzeichnungsmedium (100) in Bezug auf den Sensor (158) bewegt; und
einen Prozessor (166), an den der Sensor (158) basierend auf dem zumindest einen lesbaren Muster, das durch den Sensor (158) erfasst wird, zumindest ein Signal sendet.

## Revendications

1. Support d'enregistrement optique de données (100) adapté pour lire de celui-ci des données pouvant être enregistrées de manière optique, comprenant:
un substrat (220); et
un revêtement pouvant être marqué (230) comprenant un agent de formation de couleur,
le revêtement pouvant être marqué étant établi sur le substrat (220),
l'agent de formation de couleur (240) comprenant:
un colorant leuco;
un révélateur;
un agent de déprotection; et
une fraction protectrice sur soit le colorant, soit le révélateur;
dans lequel le revêtement pouvant être marqué (230) comporte un absorbeur de rayonnement.

2. Support d'enregistrement optique de données (100) selon la revendication 1, dans lequel le révélateur comporte un composé phénolique protégé par une fraction protectrice acyle, dans lequel l'agent de déprotection comporte une amine, et dans lequel l'élévation d'une matrice comportant l'agent de formation de couleur (240) au-dessus d'une température seuil fait, par addition d'un rayonnement d'une longueur d'onde prédéterminée, que la fraction protectrice acyle soit éliminée par l'agent de déprotection, avec pour résultat un révélateur déprotégé qui réagit avec le colorant leuco.

3. Support d'enregistrement optique de données (100) selon la revendication 1 ou 2, dans lequel, si le colorant leuco, le révélateur et l'agent de déprotection, seuls ou en combinaison l'un avec l'autre, forment des particules dans une matrice, les particules sont d'une grandeur de 1 µm ou moins.

4. Support d'enregistrement optique de données (100) selon la revendication 1 ou 2, dans lequel le colorant leuco, le révélateur et l'agent de déprotection se dissolvent substantiellement, pour former une matrice et, seuls ou en combinaison l'un avec l'autre, ne former substantiellement pas de particules dans la matrice.

5. Support d'enregistrement optique de données (100) selon l'une quelconque des revendications 1 à 4, dans lequel le revêtement pouvant être marqué (230) forme une couche lisible optiquement d'une épaisseur de 1 µm ou moins sur le support d'enregistrement optique de données (100).

6. Support d'enregistrement optique de données (100) selon l'une quelconque des revendications 1 à 5, dans lequel la couche (230) est transparente.

7. Support d'enregistrement optique de données (100) selon l'une quelconque des revendications 2 à 6, dans lequel la longueur d'onde prédéterminée du rayonnement ajouté est sélectionnée parmi le groupe composé de 370 nm à 380 nm, 380 nm à 420 nm, 400 nm à 415 nm, 468 nm à 478 nm, 650 nm à 660 nm, 780 nm à 787 nm, 970 nm à 990 nm, et 1520 nm à 1580 nm.

8. Procédé d'enregistrement optique de données, comprenant:
prévoir un support d'enregistrement optique de données (100) selon la revendication 1; et
utiliser l'application d'un rayonnement présentant une longueur d'onde prédéterminée pour former une marque détectable optiquement (242) dans le revêtement pouvant être marqué (230).

9. Système d'enregistrement optique, comprenant:
un support d'enregistrement optique de données (100) selon la revendication 1; et
une source de lumière (150) positionnée de manière à éclairer le support d'enregistrement optique de données (100) de manière désirée pour provoquer un échauffement localisé qui fait que la fraction protectrice s'éloigne du révélateur de sorte que le révélateur réagisse avec le colorant leuco.

10. Appareil d'enregistrement de données optiques, comprenant:
un support d'enregistrement optique de données (100) selon la revendication 1; et
un dispositif d'enregistrement (170) comportant une source de lumière (150).

11. Procédé pour lire des données enregistrées de manière optique, comprenant:
prévoir un support d'enregistrement optique de données (100) selon la revendication 1;
utiliser un rayonnement de lumière au-dessous d'une longueur d'onde convenant pour former une marque détectable optiquement (242) dans l'au moins un revêtement pouvant être marqué (230), le rayonnement de lumière éclairant et réfléchissant la lumière des marques détectables optiquement préalablement formées (242);
détecter, par un capteur (158), au moins un modèle lisible des marques détectables optiquement (242) éclairées par le rayonnement de lumière sur le support d'enregistrement optique de données (100), le capteur (158) lisant l'au moins un modèle lisible au fur et à mesure que le support d'enregistrement optique de données (100) se déplace par rapport au capteur (158); et
envoyer du capteur (158) au processeur (166) au moins un signal sur base de l'au moins un modèle lisible détecté par le capteur (158) du support d'enregistrement optique de données (100).

12. Procédé selon la revendication 11, comprenant par ailleurs:
analyser l'au moins un signal envoyé au processeur (166) de sorte que l'au moins un signal puisse être collecté comme données dans un ordinateur;
collecter les données dans une base de données de l'ordinateur; et
accéder aux données dans la base de données de l'ordinateur.

13. Appareil pour transmettre des données optiques, comprenant:
un support d'enregistrement optique de données (100) selon la revendication 1;
une source de lumière (150) positionnée de manière à éclairer par de la lumière le support d'enregistrement optique de données (100) de manière désirée pour faire qu'au moins une marque détectable optiquement (242) formée dans le revêtement pouvant être marqué (230) réfléchisse de la lumière de la source de lumière (150), la lumière de la source de lumière (150) éclairant le support d'enregistrement optique de données (100) avec un rayonnement au-dessous d'une longueur d'onde convenant pour former une marque détectable optiquement (242) dans le revêtement pouvant être marqué (230);
un capteur (158) positionné de manière à détecter au moins un modèle lisible de l'au moins une marque détectable optiquement (242), le capteur (158) lisant l'au moins un modèle lisible au fur et à mesure que le support d'enregistrement optique de données (100) se déplace par rapport au capteur (158); et
un processeur (166) auquel le capteur (158) envoie au moins un signal sur base de l'au moins un modèle lisible détecté par le capteur (158).
